# EUROPÄISCHE PATENTSCHRIFT

(11) **EP 1 182 841 B1**
(45) Veröffentlichungstag und Bekanntmachung des Hinweises auf die Patenterteilung: **13.01.2016**
(21) Anmeldenummer: 01112313.0
(22) Anmeldetag: 19.05.2001
(51) Int. Cl.: H04L 29/06, H04N 7/24

(54) **Verfahren zum plattformunabhängigen Streaming von Multimedia-Inhalten für IP-basierte Netze**
Method for platform independent streaming of multimedia content for IP based networks
Méthode indépendante de plate-forme pour le transfert en continu d'un contenu multimedia pour des réseaux basés sur IP

(30) Priorität: 23.08.2000 DE 10041310
(43) Veröffentlichungstag der Anmeldung: 27.02.2002
(73) Patentinhaber: Deutsche Telekom AG, 53113 Bonn (DE)
(72) Erfinder: Kirchherr, Ralf, 63225 Langen (DE); Stegmann, Joachim, 64289 Darmstadt (DE)
(74) Vertreter: Puschmann Borchert Bardehle Patentanwälte Partnerschaft mbB

(56) Entgegenhaltungen:
- EP-A- 0 803 826
- EP-A- 0 817 103
- US-A- 5 953 506
- "Java Media Players - Version 1.0.5" JAVA MEDIA PLAYERS, 11. Mai 1998 (1998-05-11), Seite COMPLETE, XP002305588

## Beschreibung

Die Erfindung betrifft ein Verfahren zum plattformunabhängigen Streaming von Multimedia-Inhalten für IP-basierte Netze mittels Java-Technologie nach dem Oberbegriff des Patentanspruches 1 und/oder des Patentanspruches 9.

Streaming-Technologien bzw. Verfahren für IP-basierte Anwendungen im Internet bzw. Intranet sind grundsätzlich bekannt und ermöglichen es dem Nutzer, beliebige Multimedia-Inhalte quasi kontinuierlich zu übertragen, so dass die Inhalte schon während der Übermittlung präsentiert werden können, ohne vorher diese vollständig herunterladen zu müssen. Die bekannten Streaming-Verfahren benutzen dazu sogenannte Plus-Ins, die auf dem Rechner zuvor installiert werden. Dies führt dazu, dass der Nutzer stets die neuste Version der Plug-Ins bereithalten muss, um die Inhalte abrufen zu können. Der damit verbundene Aufwand verhindert eine stärkere Verbreitung der Inhalte. Die Installation von Software eventuell sogar unbekannter Herkunft, widerspricht außerdem dem Sicherheitsbedürfnis vieler Anwender.

Derartige Streaming-Technologien für Multimedia-Anwendungen sind zum Beispiel in den PCT Patentanmeldungen WO97/31445 und WO/9910836 grundsätzlich beschrieben. Außerdem sind unter www.emblaze.com/-about/about-04.html von Geointeractive Media Group Ltd. grundsätzliche Vorschläge für Lösungen dieser Art mittels Java-Technologie angegeben. Das darin angegebene Verfahren kommt insbesondere ohne die sonst erforderlichen vielen Plug-Ins aus.

Allerdings sind die bekannten Streaming-Verfahren hauptsächlich auf Video-Darstellungen beschränkt, die dann aufgrund der verfügbaren Bandbreite nur eine geringe Bild- und Audioqualität aufweisen.

Ein gattungsgemäßes, sämtliche Merkmale des Oberbegriffs des Anspruches 1 aufweisendes Verfahren zum plattformunabhängigen Streaming von Multimedia-Inhalten für IP-basierte Netze mittels Java-Technik sowie eine Vorrichtung zur Durchführung des Verfahrens ist in der EP-A-0 803 826 offenbart.

Der Erfindung liegt die Aufgabe zugrunde, ein Verfahren zum plattformunabhängigen Streaming von Multimedia-Inhalten für IP-basierte Netze mittels Java-Technologie zu schaffen, so das die Multimedia-Inhalte über jedes beliebige Java-fähige Endgerät abgerufen werden können, das die Decodierung der komprimierten Multimedia-Inhalte durch ein Java-Applet übernommen werden soll, das automatisch von einem Web-Browser gestartet werden kann, das es außerdem ermöglicht, dass die Komprimierung der Daten mit Codierungverfahren erfolgt, die zum Decodieren der Daten nur eine geringe Komplexität benötigen und das sicherstellt, dass der Nutzer stets die aktuellste Softwareversion zur Verfügung hat.

Die erfindungsgemäße Lösung der Aufgabe ist im Kennzeichen des Patentanspruches 1 charakterisiert. Weitere Lösungen der Aufgabe und Ausgestaltungen sind in den Kennzeichen der Patentansprüche 2 bis 11 charakterisiert.

Durch das erfindungsgemäße Verfahren mit Hilfe des Einsatzes der Java-Technologie sind die Multimedia-Inhalte über jedes beliebige Java-fähige Endgerät abrufbar. Die Decodierung der komprimierten Multimedia-Inhalte übernimmt dabei ein Java-Applet, das automatisch von einem Web-Browser gestartet wird. Die Komprimierung der Daten erfolgt mit Codierverfahren, die zum Codieren der Daten nur eine geringe Komplexität benötigen. Der Nutzer hat stets die aktuellste Softwareversion zur Verfügung, da der eigentliche Player, das heißt das Applet jedesmal mitübertragen wird. Der Benutzer braucht daher keinerlei Hard- oder Software-Installationen durchzuführen, sofern er nur einen kompatiblen Java-fähigen Browser besitzt. Damit wird ein niedrigschwelliger Zugang zu multimedialen Inhalten gewährt und ermöglicht.

Zudem können zum Abrufen der Information auch alternative Internet-Endgeräte, wie zum Beispiel Screenphones, die normalerweise keine Installation von Plug-Ins zulassen, verwendet werden, sofern diese den Java-Standard unterstützen. Aufgrund des Java-Sicherheitskonzepts, zum Beispiel Sandbox-Modell, ist ein ungewünschter Zugriff auf sicherheitsrelevante Systemresourcen weitgehend ausgeschlossen. Mit diesem Streaming-Verfahren können sowohl Audio-, Video- als auch einzelne Bildinhalte oder Texte übertragen werden. Durch eine flexible Kombination dieser Multimedia-Inhalte wird es einem Anbieter (Content-Provider) ermöglicht, die für seine Zwecke geeigneten Darstellungsformen auswählen zu können.

Bei vielen Anwendungen sind zum Beispiel hochqualitative Sequenzen von Einzelbildern vorteilhafter als Videodarstellungen bei gleicher Bitrate, die dann nur eine mäßige Bildqualität erlauben.

Der Player ist als Java-Applet realisiert.

Verschiedene für die jeweilige Bitrate optimierte Schmalband-Codierverfahren mit geringer Komplexität auf Decoderseite (CELP- bzw. Waveform-Coder) werden bereitgestellt.

Es sind flexibel kombinierbare Multimedia-Elemente, wie zum Beispiel Audio-Signale, Bewegbilder, Einzelbilder/Graphiken, Text, URLs-Links, ohne weiteres möglich, wobei die Konfiguration über Applet-TAG-Parameter erfolgt.

Es besteht die Navigationsmöglichkeit zwischen den einzelnen Inhalten durch Gliederung in Abschnitte. Die Auswahl erfolgt über Standard-Graphik-Elemente, wie zum Beispiel Listen oder Auswahlboxen.

Über die Schätzung der vorhandenen Bitrate erfolgt eine automatische Adaption und Auswahl der Codierverfahren.

Das Verfahren ist auch bei Vorhandensein von Firewall/Proxy durch Unterstützung von HTTP-Streaming einsetzbar. Die Multimedia-Daten werden in Form einer HTTP-Response übertragen.

Außerdem erfolgt die Einteilung der zur decodierenden Bildelemente in kleinere Teilbilder, um eine gleichmäßigere Verteilung der vorhandenen Rechenzeit auf die einzelnen Threads realisieren zu können.

Für die Komprimierung der Multimedia-Inhalte, insbesondere der Audio-Inhalte, werden komplexitätsarme Codierverfahren verwendet, die beim Decoder sowohl in Bezug auf Programmcodegröße als auch in Bezug auf die benötigte Rechenleistung nur geringe Anforderungen stellen und trotzdem eine befriedigende bzw. gute Audioqualität liefern. Die Komplexität des Encoders ist dabei von untergeordneter Bedeutung, da die Kompression der Inhalte vom Inhalte-Anbieter durchgeführt wird.

Um auch bei unterschiedlichen Netzanbindungen eine möglichst hohe Audioqualität erzielen zu können, werden mehrere unterschiedliche Codierverfahren angeboten, die auf die jeweilige Bitrate optimiert sind. Niederratige Sprach-Codes nach dem CELP-Verfahren ermöglichen auch eine Übertragung von Sprachsignalen bei schlechter Netzanbindung. Gleichzeitig ist die Komplexität der Decoder bei diesem Verfahren deutlich geringer als die der zugehörigen Encoder.

Für die Übertragung von Sprach- und Musiksignalen bei höheren Bitraten werden Waveform-Coder eingesetzt. Durch Verwendung von Embedded-Coding-Technologien kann die Decodierung besonderes effizient gestaltet werden.

Die Audio- und Video-Daten werden zu einzelnen Rahmen konstanter Zeitdauer zusammengefaßt, die dann einzeln übertragen und nacheinander im Client decodiert werden.

Weitere Multimedia-Elemente, wie zum Beispiel Bilder, Texte oder URLs, werden in den Bitstrom der Audio-/Video-Daten multiplext, so daß diese zu den jeweils gewünschten Zeitpunkten zur Verfügung stehen. Ein Client muß daher nur einen einzigen Datenstrom einlesen, aus dem dann die jeweiligen Multimedia-Elemente decodiert werden können. Dazu wird ein spezieller Datensatz mit Steuerinformationen erstellt, der Angaben zu dem Zeitpunkt, der Dauer und der Größe der einzelnen Multimedia-Elemente enthält.

Weitere Vorteile, Merkmale und Anwendungsmöglichkeiten der vorliegenden Erfindung, insbesondere des plattformunabhängigen Streamings von Multimedia-Inhalten für IP-basierte Netze mittels Java-Technologie, ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: eine Generierung der Multimedia-Inhalte;
- Fig. 2: ein Beispiel für den Aufbau einer graphischen Benutzerschnittstelle (GUI) des Players;
- Fig. 3: ein detaillierteres Flußdiagramm;
- Fig. 4: eine beispielsweise Unterteilung eines Einzelbildes in mehrere Teilbilder und
- Fig. 5: eine Darstellung zur Bitratenschätzung.

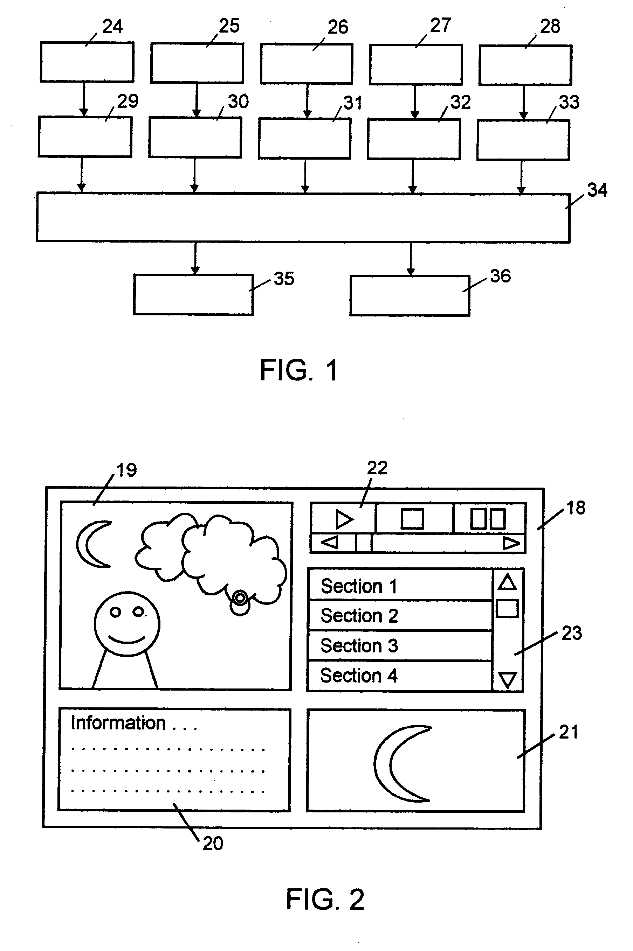

In Fig. 1 ist prinzipiell die Generierung der Multimedia-Inhalte und deren Codierung zur Komprimierung der Inhalte und Informationen sowie die Aufteilung der Multimedia-Inhalte in einzelne inhaltliche Abschnitte gezeigt. Für die Codierung der Bildinhalte werden Bildcodierverfahren verwendet, die auf der Decoderseite nur geringe Anforderungen in Bezug auf Programmcodegröße und Rechenleistung stellen bzw. bereits in der Java-Virtuell-Maschine implementiert sind. Im Strukturbild zur Generierung der Multimedia-Inhalte nach Fig. 1 sind dargestellt die Audio-Inhalte 24, die Video-Inhalte 25, die Bilder und/oder Graphiken 26, die Textinformationen 27 und die URLs (Links) 28. Jedem dieser bestimmte Inhalte, Informationen u.s.w. darstellende Kästchen 24 bis 28 ist ein spezieller Codierer 29 bis 33 nachgeordnet, nämlich
- ein Codierer 29 zur Komprimierung der Audio-Inhalte (Codierung erfolgt rahmenweise)
- ein Codierer 30 zur Komprimierung der Video-Inhalte (Codierung erfolgt rahmenweise)
- ein Codierer 31 zur Komprimierung der Bild-Inhalte
- ein Codierer 32 zur Komprimierung der Textinformationen und
- ein Codierer 33 zur Komprimierung der URLs.

Den Codierern 29 bis 33 ist ein Multiplexer 34 nachgeordnet, der zum Aufteilen der Multimedia-Inhalte in einzelne inhaltliche Abschnitte dient.

Am Ausgang des Multiplexers 34 erscheinen die komprimierten Multimedia-Daten 35, wobei alle Inhalte sequentiell multiplext sind, je ein Datensatz pro Abschnitt.

Außerdem entstehen am Ausgang des Multiplexers 34 Steuerinformationen 36 über die einzelnen Multimedia-Elemente und zwar je ein Datensatz pro Abschnitt. Die Steuerinformationen 36 enthalten Informationen über den Zeitpunkt, die Dauer und die Größe der einzelnen Multimedia-Elemente. Ebenfalls enthalten sind konstante Header-Daten für einzelne Medienformate (zum Beispiel JPEG), die sich in dem jeweiligen Abschnitt nicht ändern und daher nicht für jeden Rahmen neu übertragen werden müssen.

Im vorliegenden Beispiel ist das Applet vollständig in Java realisiert, um so die Plattformunabhängigkeit der Anwendung zu gewährleisten. Um auch eine Kompatibilität mit älteren Web-Browsern zu gewährleisten wird Java 1.0 Standard verwendet. Weitgehende Funktionen neuerer Java-Standards werden verwendet, wenn der Browser diese unterstützt, ansonsten wird nur die Grundfunktionalität zur Verfügung gestellt. Das Applet fängt dabei automatisch Fehlermeldungen ab, die auf der Verwendung eines neueren (nicht unterstützten) Java-Standards beruhen und führt stattdessen alternative Programmroutinen mit eventuell eingeschränkter Funktionalität aus.

Die Konfiguration des Players (Applets) erfolgt über die Applet-Tag-Parameter. Diese Konfiguration ermöglicht dem Inhalte-Anbieter die Anpassungen an Layout und Funktionalität auf einfache Weise vornehmen zu können.

Zur Konfiguration stehen für den Inhalt der Anbieter folgende Optionen zur Verfügung:
- Auswahl der gewünschten Multimedia-Elemente (Audio, Video, Einzelbilder, Text, URL, ...)
- Angabe eines Titels
- Angabe der Bezeichnung der einzelnen Abschnitte
- Angabe der zur Verfügung stehenden Codierverfahren mit Bezeichnung
- Größe der darzustellenden optischen Multimedia-Elemente (Video, Bilder).

Die Inhalte könnnen zur besseren Übersicht in einzelne Abschnitte gegliedert werden. Damit wird dem Nutzer die Möglichkeit gegeben, auf die jeweiligen Abschnitte gezielt zugreifen zu können. Um die Programmcodegröße gering zu halten, werden zur Navigation Standard-Graphik-Elemente (Listen, Auswahlboxen, Rollbalken) verwendet.

Ein Beispiel für eine mögliche Kombination verschiedener Multimedia-Elemente in einem Player ist in Fig. 2 dargestellt. Dies ist auch gleichzeitig ein Beispiel für den Aufbau einer graphischen Benutzerschnittstelle (GUI) des Players. 18 stellt dabei das Appletfenster dar, 19 das Fenster für die Video-Darstellungen, 20 das Fenster für die Darstellung von Textinformationen (eventuell noch mit Links für weitergehende Informationen), 21 ein Fenster zur Darstellung von Einzelbildern/Bildersequenzen, zum Beispiel für Detail-Darstellungen, 22 eine Steuerleiste mit Start, Stopp, Pause und Schieberegler zum "Vor- und Zurückspulen" und 23 eine Auswahlbox für die inhaltlichen Abschnitte.

Für die Übertragung der Inhalte werden zwei unterschiedliche Anwendungen unterschieden, nämlich On-Demand-Streaming für vorgefertigte Inhalte und Live-Streaming.

Zunächst soll das On-Demand-Streaming näher beschrieben werden.

Dabei werden die bereitzustellenden Inhalte Offline mit einem separaten Encoder-Tool komprimiert, so daß vorgefertigte Inhalte entstehen, die dann jederzeit vom Nutzer abgerufen werden können. Die codierten Daten werden dabei mit Hilfe des HTTP-Protokolls übertragen. Es wird daher lediglich statischer Speicherplatz auf einem Web-Server benötigt, das heißt der Betrieb eines eigenständigen Servers entfällt für den Inhalt der Anbieter, was einen sehr großen Vorteil des erfindungsgemäßen Verfahrens darstellt.

Die codierten Daten werden zu einer gemeinsamen Multimedia-Datei zusammengefaßt, so daß die Daten über einen einzelnen Stream übertragen werden können. Die benötigten Informationen über den Darstellungszeitpunkt sowie die Größe der einzelnen Multimedia-Elemente werden dazu vorher aus der Steuerdatei eingelesen.

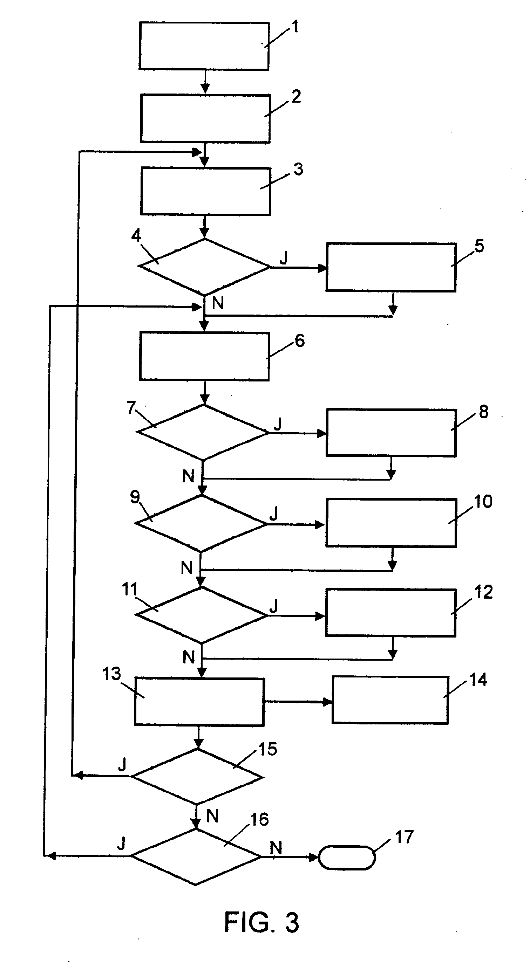

Im nachfolgenden wird anhand eines Flußdiagramms nach Fig. 3 der Ablauf des On-Demand-Streaming-Verfahrens grundsätzlich beschrieben, wobei betont werden soll, daß dieser Ablauf auch grundsätzlich für das anschließend beschriebene Live-Streaming gilt.

In 1 wird das Applet geladen und gestartet. Aus dem Applet-Tag werden die Parameter ausgelesen, die die gewünschte Konfiguration des Players beschreiben. Dabei wird unter anderem die Art der gewünschten Darstellung, wie Audio, Video, Bildersequenzen u.s.w., sowie deren Größe angegeben.

In 2 wird die graphische Benutzerschnittstelle GUI in Abhängigkeit der Player Parameter aufgebaut, so daß die gewünschten Multimediaelemente dargestellt werden können, zum Beispiel separates Fenster zur Darstellung der Bilder.

In 3 wird eine für den entsprechenden inhaltlichen Abschnitt sowie für die ausgewählte Bitrate gültige Binärdatei (Steuerdatei) eingelesen, die Informationen über den Zeitpunkt, die Dauer und die Größe der einzelnen Multimedia-Elemente enthält; beispielsweie wann soll für wie lange ein entsprechendes Bild mit bestimmter Pixelgröße angezeigt werden. Ebenfalls enthalten sind konstante Header-Daten für einzelne Medienformate, die sich in dem Abschnitt nicht ändern und daher nicht für jeden Rahmen neu übertragen werden müssen.

In 4 soll im Stream weiter fortgefahren werden oder der Anwender will an eine bestimmte Stelle im Stream springen, zum Beispiel Vor-/Rückspulen. Diese Information wird über die graphische Benutzerschnittstelle übermittelt, zum Beispiel durch nicht hier dargestellte Schieberegler.

Bei 5 wird mit Hilfe der in der Steuerdatei enthaltenen Informationen der Offset in Byte berechnet, an dem sich die gewünschten Daten innerhalb der Multimedia-Datei befinden, wenn die Wiedergabe des Streams an einer beliebigen Stelle beginnen soll. Die codierten Multimedia-Daten (rahmenweise komprimierte Inhalte) werden dann über einen HTTP-Request erst ab der durch den Offset spezifizierten Stelle angefordert, so daß die Daten, die vorhergehende und damit nicht gewünschte Inhalte beschreiben, nicht unnötig über das Netz geladen werden müssen.

Die Inhalte werden zeitlich rahmenweise (typisch < 1 Sekunde) eingelesen, prozessiert und ausgegeben. Die Schritte 6 bis 14 beschreiben dabei einen Zyklus, wie er einmal pro Rahmen durchlaufen wird, nämlich wie folgt:
Gemäß 6 werden aus der Steuerdatei die für diesen Zeitpunkt darzustellenden Multimedia-Elemente ermittelt. Zum Beispiel sollen neue Bild- oder Textinformationen dargestellt werden?

In 7 wird festgelegt, ob zu diesem Zeitpunkt (Rahmen) ein neues Bild dargestellt werden soll.

Gemäß 8 werden die benötigten Bilddaten (Größe in der Steuerdatei angegeben) über das Netz eingelesen und decodiert. Dabei werden für die Decodierung (typischerweise JPEG-Decodierung) die Bilddaten in kleinere Teilbilder aufgeteilt, um so die Rechenleistung besser zwischen den einzelnen Programm-Threads aufteilen zu können. Die einzelnen Teilbilder werden gesammelt und dann schließlich gemeinsam über die Schnittstelle GUI dargestellt, wie später noch beschrieben wird.

In 9 wird festgestellt, ob zu diesem Zeitpunkt (Rahmen) eine Textinformation dargestellt werden soll.

In 10 wird die Zeichenkette (Größe ist in der Steuerdatei angegeben) über das Netz eingelesen und decodiert. Die Textinformation wird anschließend über die Schnittstelle GUI angezeigt.

Gemäß 11 soll zu diesem Zeitpunkt (Rahmen) die Möglichkeit bestehen, zu anderen URLs verzweigen zu können, zum Beispiel für weitergehende Informationen.

In 12 wird die für die Adresse benötigte Zeichenkette (Größe ist in der Steuerdatei angegeben) über das Netz eingelesen und zu einer URL zusammengesetzt. Wenn der Anwender zu dieser Adresse verzweigen will, zum Beispiel durch Klicken auf ein entsprechendes Feld, kann der Browser direkt zu dieser URL wechseln.

In 13 werden die codierten Audio- bzw. Videodaten für die zeitliche Länge eines Rahmens über das Netz eingelesen und anschließend decodiert.

In 14 werden die decodierten Audio/Videodaten dann an einen speziellen Programm-Thread zur Ausgabe (Audio/Video Rendering) weitergegeben und eventuell gepuffert, so daß bereits die Bearbeitung des nächsten Rahmens beginnen kann solange noch der alte Rahmen ausgegeben wird.

In 15 wird festgestellt, ob zu einem anderen inhaltlichen Abschnitt oder zu einer anderen Bitrate gewechselt werden soll. Die Steuerung erfolgt hierbei durch den Anwender über die Schnittstelle GUI.

In 16 wird festgestellt, ob noch weitere Multimedia-Daten bzw. Rahmen vorhanden sind, die prozessiert und ausgegeben werden können und
in 17 wird der Multimedia-Stream vollständig ausgegeben.

Das Applet wird angehalten bzw. beendet.

Die Kommunikation zwischen Client und Web-Server kann von Seiten des Clients aus mit einer Socket-Verbindung oder mit einer "URL-Connection" erfolgen. Ersterer Fall ist häufig günstiger, um Optionen des HTTP-Requests direkt beeinflussen zu können, zum Beispiel Option "Byte Ranges" wird für Punkt bzw. Schritt 5 in Fig. 3 verwendet. Im Falle einer vorhandenen Firewall bzw. Proxy erfolgt die Verbindung automatisch über die URL-Connection (im Java-Syntax heißt die Klasse URL-Connection). Die automatische Detection der erforderlichen Verbindungsart erfolgt analog dem Live-Streaming-Verfahren das nachfolgend näher beschrieben wird.

Bei Live-Inhalten müssen die Signaldaten wie Audio-, Video- und Bildinhalte in Echtzeit codiert werden. Die Decodierung nimmt dabei ein spezieller Server vor, der die codierten Multimedia-Inhalte dann an die angeschlossenen Clients, das heißt Applets, übermittelt.

In diesem Fall können die Daten über UDP, TCP (Socket)- oder HTTP-Verbindungen übertragen werden.

Die Unterstützung von HTTP-Streaming ermöglicht den Zugriff auf die Multimedia-Inhalte auch über Netzgrenzen hinweg, wie zum Beispiel Firewall oder Proxy, da keine separate Socketverbindung aufgebaut werden muß. Dabei werden die codierten Daten abschnittweise aus einem Klassenobject vom Typ URL-Connection eingelesen. Diese Verbindungsart ist immer dann notwendig, wenn bei einer eventuell vorhandenen Firewall nur der WWW-Dienst freigeschaltet ist. Der Server wartet in diesem Fall aktiv an dem normalerweise für WWW-Abfragen benutzten Port auf eingehende HTTP-Anfragen. Der Client erzeugt dann über eine URL-Connection eine Anfrage zu einer bestimmten URL, die vom Server als Anfrage für die Echtzeitdaten erkannt wird. Der Server kann daraufhin in Form einer HTTP-Response die codierten Daten übermitteln. Wenn sich zwischen dem Server und dem Client keine Netzübergänge befinden, sind andere Verbindungsarten, wie zum Beispiel TCP oder UDP oftmals vorteilhafter. Die codierten Daten werden in diesen Fällen über die jeweiligen Verbindungsschnittstellen ausgegeben.

Daher wird beim Starten des Applets zunächst versucht, eine solche UDP- bzw. TCP-Verbindung aufzubauen.

Damit das System nicht unnötig lange blockiert wird, wenn dieser Verbindungstyp nicht möglich sein sollte, erfolgt der Verbindungsaufbau in einem eigenen Thread, der nach einer festgelegten Zeitspanne von wenigen Sekunden abgebrochen wird, wenn bis dahin keine Verbindung zustandegekommen ist. In diesem Fall erfolgt die Übertragung mit Hilfe des HTTP-Protokolls. Damit ist sichergestellt, daß das System in jedem Fall selbständig den geeigneten Verbindungstyp herstellt.

Der Programmablauf auf Client-Seite ist damit prinzipiell identisch mit dem Programmauflauf bei On-Demand-Streaming. Der Unterschied besteht nur darin, daß die Daten, nämlich Multimedia- und Steuerdaten nicht aus abgespeicherten Dateien eingelesen werden sondern quasi kontinuierlich vom Server übertragen werden. Mit anderen Worten heißt das, daß der Server die Daten rahmenweise in Echtzeit prozessiert und zwar so wie sie auch vom Client rahmenweise eingelesen werden. Prinzipiell ist diese Streaming-Variante keineswegs auf Live-Inhalte beschränkt. Die durch den Einsatz einer speziellen Server-Software bedingten Vorteile, zum Beispiel

Übertragung mit UDP bzw. TCP, automatische Bitratenschätzung, können auch für vorgefertigte Inhalte genutzt werden.

Im nachfolgenden wird die Aufteilung der Rechenleistung auf die einzelnen Programmthreads/Bilddarstellung beschrieben.

Viele Implementierungen der Java-Virtuell-Maschine in den verschiedenen Browsern erlauben es nicht, die einzelnen Threads des Applets unterschiedlich zu priorisieren. Es ist jedoch gerade bei der Audio-Ausgabe sicherzustellen, daß die Programm-Routinen, die für die Ausgabe des Audiosignals verantwortlich sind, rechtzeitig ausgeführt werden, damit die Audio-Ausgabe nicht durch kurze Aussetzer gestört wird. Damit ein einzelner Thread den Programmlauf nicht zulange blockiert, wird der Programmalgorithmus in einzelne kleinere Programmroutinen unterteilt, wobei jeweils am Ende einer Routine die Programmausführung an einen anderen Thread übergeben wird.

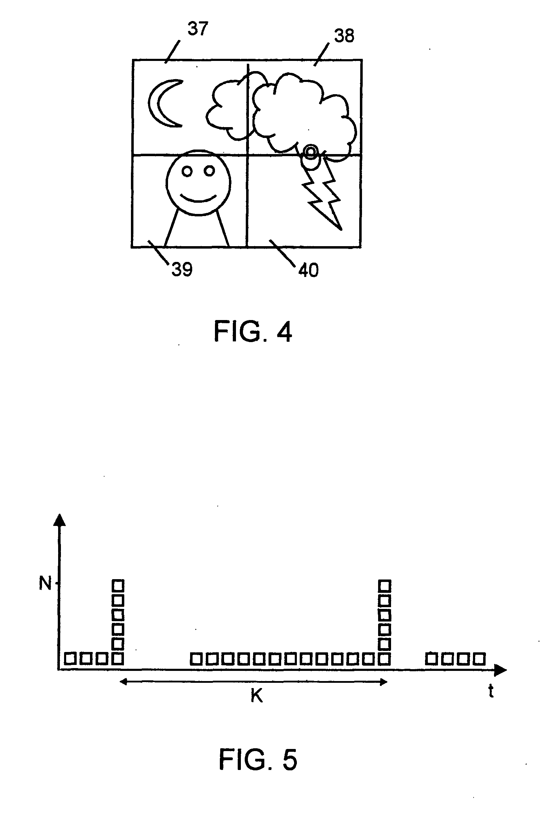

Um auch großformatige Bilder als Multimedia-Inhalte präsentieren zu können, darf die Programmausführung nicht zu lange durch die benötigte Decodierung des Bildformats blockiert werden. Deshalb wird das darzustellende Bild in kleinere Einzelbilder aufgeteilt, die dann nacheinander dargestellt werden können, so daß zwischen der Decodierung der einzelnen Teilbilder jeweils kurzzeitig die Programmausführung an andere Threads übergeben werden kann. Diese Aufteilung eines Bildes, beispielsweise in vier Teilbilder, ist in Fig. 4 dargestellt.

In Fig. 4 ist das Bild in ein erstes Teilbild 37, ein zweites Teilbild 38, ein drittes Teilbild 39 und ein viertes Teilbild 40 aufgeteilt, die dann nacheinander dargestellt werden können, so daß zwischen der Decodierung der einzelnen Teilbilder 37 bis 40 jeweils kurzzeitig die Programmausführung an andere Threads übergeben werden kann.

Im nachfolgenden wird nun eine automatische Bitratenadaption beschrieben.

Wenn wie im Fall des Live-Streamings eine spezielle Serversoftware verwendet wird, kann auf der Client-Seite eine automatische Adaption der verwendeten Codierverfahren, sowohl Audio als auch Video, erfolgen, indem die zur Verfügung stehende Bitrate geschätzt wird.

Die automatische Bitratenadaption beruht auf einer Schätzung der zur Verfügung stehenden Bandbreite. Entsprechend dieses Schätzwertes wird ein passendes Codierverfahren ausgewählt, dessen Bitrate mit der vorhandenen Bandbreite übertragen werden kann.

Eine geeignete Schätzung der bei der vorhandenen Netzanbindung zur Verfügung stehenden Bitrate kann durch die Übertragung eines Datenblocks bestimmter Größe erfolgen, bei gleichzeitiger Bestimmung der für die Übertragung benötigten Zeit. Der Bitraten-Schätzwert errechnet sich dann aus dem Quotienten zwischen Anzahl der übertragenen Bits und der dafür benötigten Zeit t.

Um hier verlässliche Schätzwerte erzielen zu können, dürfen die übertragenen Datenblöcke jedoch nicht zu klein sein, da sich im anderen Fall kurzzeitige Übertragungsschwankungen nicht herausmitteln bzw. die Zeitmessungen im Verhältnis zur Datengröße zu ungenau werden.

Um eine genauere Bitratenschätzung zu ermöglichen, werden daher N Datenblöcke (Rahmen) zur Bitratenbestimmung gleichzeitig übertragen, um so die Übertragungsdauer einer größeren Datenmenge messen zu können.

Am Server muß daher ein entsprechender Puffer vorhanden sein, in dem die Datenblöcke von der Echtzeit-Signalquelle zwischengespeichert werden. Aus diesem Puffer können dann die einzelnen Datenblöcke zum Client übertragen werden. Die Bitratenschätzung bzw. die zugehörige Adaption des Codierverfahrens erfolgt nur alle K Sekunden, um so auch ein zu häufiges Umschalten zwischen den verschiedenen Codierern ausschließen zu können. Das heißt mit anderen Worten, daß der Client nach dem Zeitintervall K gemäß Fig. 5 zusätzlich zu den regelmäßig übertragenen Audioblöcken N weitere Audiodatenblöcke anfordert. Die Zeit t, die der Client dann benötigt, diese Daten einzulesen und zu decodieren, dient als Grundlage zur Berechnung des Bitraten-Schätzwertes.

Nach der Übertragung der N Audioblöcke unterbricht der Server dann die Übertragung für weitere Audio-Blöcke, bis der Client die gepufferten N Audioblöcke abgespielt hat.

Die zur Übertragung verwendeten Codierverfahren bestimmen sich durch den Schätzwert der Bitrate. Dabei wird dasjenige Codierverfahren ausgewählt, dessen Nettobitrate noch mit der geschätzten Netzbandbreite übertragen werden kann. Wenn dabei ein anderes Codierverfahren ermittelt wird als das, das zur Zeit für die Übertragung verwendet wird, dann schickt der Client einen entsprechenden Befehl zum Server der daraufhin das Codierverfahren umschaltet.

Die Schwellen für die Umschaltung zwischen den Codierverfahren sollten großzügig bemessen sein, das heißt erst wenn die geschätzte Bitrate deutlich über der für die jeweiligen Codierverfahren benötigten Nettobitrate liegt, kann dieser Codierer für die Übertragung verwendet werden. Dadurch ist sichergestellt, daß auch bei kleineren Schwankungen in der Übertragungsbandbreite bzw. bei ungenauer Schätzung der Bitrate eine stabile Übertragung der Multimedia-Daten erfolgt bzw. möglich ist.

### Liste der Bezugszeichen

- 1: Applet laden, starten und Parameter auswerten
- 2: GUI aufbauen
- 3: Steuerdatei einlesen
- 4: Im Stream springen?
- 5: Offset berechnen und Multimedia-Datei an entsprechender Stelle anfordern
- 6: Aussteuerdateiart der Multimedia-Elemente für diesen Rahmen berechnen
- 7: Feststellen ob Bild
- 8: Bilddaten auslesen, decodieren und darstellen
- 9: Feststellen ob Text
- 10: Textinformation auslesen und darstellen
- 11: Feststellen, ob URL
- 12: Adresse auslesen und bei Klick zu dieser URL wechseln
- 13: Audio-/Videorahmen einlesen und decodieren
- 14: Thread zur Ausgabe der Audio-Videoinhalte
- 15: Feststellen ob neuer Abschnitt/oder neue Bitrate
- 16: Feststellen ob weitere Daten vorhanden
- 17: Ende
- 18: Applet-Fenster
- 19: Fenster für Video-Darstellungen
- 20: Fenster für Text-Informationendarstellung
- 21: Fenster für Einzelbilder/Bildsequenzendarstellungen
- 22: Steuerleiste
- 23: Auswahlbox für inhaltliche Abschnitte
- 24: Audioinhalte
- 25: Videoinhalte
- 26: Bilder, Graphiken
- 27: Textinformationen
- 28: URLs
- 29: Codierer zur Komprimierung der Audioinhalte
- 30: Codierer zur Komprimierung der Videoinhalte
- 31: Codierer zur Komprimierung der Bildinhalte
- 32: Codierer zur Komprimierung von Textinformationen
- 33: Codierer zur Komprimierung der URLs
- 34: Multiplexer
- 35: komprimierte Multimedia-Daten
- 36: Steuerinformationen
- 37: erstes Teilbild
- 38: zweites Teilbild
- 39: drittes Teilbild
- 40: viertes Teilbild

## Patentansprüche

1. Verfahren zum plattformunabhängigen Streaming von Multimedia-Inhalten für IP-basierte Netze mittels Java-Technik, insbesondere für das Internet oder Intranet, bei dem Multimedia-Inhalte quasi kontinuierlich übertragen werden können, so dass Inhalte schon während der Übermittlung präsentiert werden können ohne dass diese bereits vollständig herunter geladen sind, wobei die Multimedia-Inhalte (24-28) komprimiert werden unter Verwendung von Codierverfahren (29-33) und eine Decodierung von komprimierten Multimedia-Inhalten (35) mit Hilfe eines Java-Applet (18) erfolgt, das automatisch von einem Web-Browser gestartet wird und wobei Multimedia-Elemente wie Audiosignale, Bewegtbilder, Einzelbilder/Graphiken, Text, URLs/Links (24-28, 19-21) flexibel kombinierbar sind und eine Konfiguration über Java-Applet-Tag-Parameter erfolgt und wobei die Multi-media-Inhalte zu einzelnen Datenblöcken konstanter Zeitdauer zusammengefasst werden, die dann einzeln übertragen und nacheinander in einem Client decodiert werden, **dadurch gekennzeichnet, dass** eine automatische Adaption und Auswahl der Codierverfahren über eine Schätzung der jeweils vorhandenen Bitrate erfolgt, wobei für die Schätzung der vorhandenen Bitrate jeweils nach einem Zeitintervall (K) zusätzlich zu den regelmäßig übertragenen Datenblöcken mehrere (N) weitere Datenblöcke gleichzeitig übertragen werden und anhand des ermittelten Schätzwertes das Codierverfahren ausgewählt wird, dessen Nettobitrate noch mit der geschätzten Netzbandbreite übertragen werden kann, wobei ein Umschalten zwischen den Codierverfahren erst erfolgt, wenn die geschätzte Bitrate deutlich über der für die jeweiligen Codierverfahren benötigten Nettobitrate liegt.

2. Verfahren nach Patentanspruch 1, **dadurch gekennzeichnet, dass** die Komprimierung der Daten mit Schmalband-Codierverfahren, insbesondere CELP- bzw. Waveform-Coder, erfolgt und dadurch, dass das Java-Applet als der eigentliche Player jedesmal mitübertragen wird.

3. Verfahren nach einem der vorhergehenden Patentansprüche, **dadurch gekennzeichnet,**
**daß** Internet-Endgeräte, die den Java-Standard unterstützen, zum Abrufen der Informationen verwendet werden und
**daß** mit dem Streamingverfahren sowohl Audio-, Videoals auch einzelne Bild-Inhalte oder Texte übertragen werden.

4. Verfahren nach einem der vorhergehenden Patentansprüche, **dadurch gekennzeichnet,**
**daß** eine Navigationsmöglichkeit zwischen den einzelnen Inhalten durch Gliederung in Abschnitte erfolgt und
**daß** die Auswahl über Standardgraphikelemente, zum Beispiel Listen oder Auswahlboxen erfolgt.

5. Verfahren nach einem der vorhergehenden Patentansprüche, **dadurch gekennzeichnet,**
**daß** die Multimedia-Daten in Form einer HTTP-Response übertragen werden.

6. Verfahren nach Patentanspruch 5, **dadurch gekennzeichnet,**
**dass** bei Vorhandensein von geschützten Anwendungen, Netzen oder Teilen von Netzen, zum Beispiel im Falle von Firewall bzw. Proxy, das plattformunabhängige Streaming von Multimedia-Inhalten in IP-basierten Netzen durch die Unterstützung von HTTP-Streaming erfolgt.

7. Verfahren nach einem oder mehreren der vorhergehenden Patentansprüche, **dadurch gekennzeichnet,**
**daß** zur gleichmäßigeren Verteilung von vorhandener Rechenzeit auf einzelne Threads eine Einteilung von zu decodierenden Bildelementen in kleinere Teilbilder (37 bis 40) erfolgt.

8. Verfahren nach einem oder mehreren der vorhergehenden Patentansprüche, **dadurch gekennzeichnet,**
**daß** bereitzustellende Inhalte off-line mit einem separaten Encoder-Tool komprimiert werden und
**daß** die codierten Daten dabei mit Hilfe des HTTP-Protokolls übertragen werden, wobei die codierten Daten zu einer gemeinsamen Multimedia-Datei zusammengefaßt werden, so daß die Daten über einen einzelnen Stream übertragen werden und die benötigten Steuerinformationen über den Darstellungszeitpunkt sowie die Größe der einzelnen Multimedia-Elemente aus einer Steuerdatei vorher eingelesen werden.

9. Verfahren zum plattformunabhängigen Streaming von Multimedia-Inhalten für IP-basierte Netze mittels Java-Technik, insbesondere bei On-Demand-Streaming, wobei die Multimedia-Inhalte in einzelne inhaltliche Abschnitte (23) aufgeteilt sind, die Audio- und Video-Inhalte in einzelnen Rahmen konstanter Zeitdauer komprimiert sind und die codierten Multimedia-Inhalte in einer gemeinsame Multimedia-Datei (35) zusammengefasst sind, umfassend die folgenden Verfahrensschritte
a) dass (1) ein Java-Applet als Player geladen und gestartet wird und dass aus dem Java-Applet-Tag Parameter ausgelesen werden, die die gewünschte Konfiguration des Players beschreiben,
b) dass (2) eine graphische Benutzerschnittstelle, GUI, in Abhängigkeit der Playerparameter aufgebaut wird,
c) dass (3) eine für einen entsprechenden inhaltlichen Abschnitt und eine ausgewählte Bitrate gültige Steuerdatei (36) eingelesen wird, die Informationen über den Zeitpunkt, die Dauer und die Größe der einzelnen Multimedia-Elemente enthält,
d) dass (4) eine Abfrage erfolgt, ob im Stream weiter fortgefahren werden soll oder der Anwender an eine bestimmte Stelle im Stream springen will, wobei diese Information über eine graphische Benutzerschnittstelle übermittelt wird,
e) dass (5) bei Wiedergabe des Streams an beliebiger Stelle mit Hilfe der in der Steuerdatei enthaltenen Informationen der Offset in Byte berechnet wird, an dem sich die gewünschten Daten innerhalb der Multimedia-Datei befinden,
f) dass (6) die codierten Multimedia-Daten als rahmenweise komprimierte Inhalte danach über einen HTTP-Request erst ab der durch den Offset spezifizierten Stelle angefordert werden, und dass aus der Steuerdatei die für diesen Zeitpunkt darzustellenden Multimedia-Elemente ermittelt werden,
g) dass (7) festgestellt wird, dass für diesen Zeitpunkt ein neues Bild dargestellt werden soll,
h) dass (8) die benötigten Bilddaten über das Netz eingelesen und decodiert werden,
i) dass die Bilddaten dabei insbesondere in kleinere Teilbilder aufgeteilt werden, die gesammelt und gemeinsam über die Benutzerschnittstelle, GUI, dargestellt werden,
j) dass (9) festgestellt wird, ob zu diesem Zeitpunkt neue Textinformationen dargestellt werden sollen und dass die neuen Textinformationen in Form einer Zeichenkette, deren Größe in der Steuerdatei angegeben ist, über das Netz eingelesen und decodiert (10) sowie über die Schnittstelle, GUI, angezeigt wird,
k) dass (11) festgestellt wird, ob zu diesem Zeitpunkt die Möglichkeit besteht zu anderen URLs zu verzweigen,
l) dass (12) eine für die Adresse benötigte Zeichenkette über das Netz eingelesen und zu der zu verzweigenden URL zusammengesetzt wird, wobei ein vorhandener Browser direkt zu dieser URL wechselt, wenn der Anwender zu dieser Adresse verzweigen will,
m) dass (13) die codierten Audio- bzw. Videodaten für die zeitliche Länge eines Rahmens über das Netz eingelesen und anschließend decodiert werden,
n) dass (14) die decodierten Audio- bzw. Videodaten dann an einen speziellen Programm-Thread zur Ausgabe direkt weitergegeben oder gepuffert werden und dass dadurch die Prozessierung des nächsten Rahmens beginnen kann und zwar solange noch der alte Rahmen ausgegeben wird,
o) dass (15) festgestellt wird, dass zu einem anderen inhaltlichen Abschnitt oder zu einer anderen Bitrate gewechselt werden soll, wobei die Steuerung über die Benutzerschnittstelle GUI, durch den Anwender erfolgt,
p) dass (16) geprüft wird, ob noch weitere Multimedia-Daten vorhanden sind, die prozessiert und ausgegeben werden können,
q) dass (17) danach der Multimedia-Stream vollständig ausgegeben wird und das Applet angehalten/beendet wird.

10. Verfahren nach einem der vorhergehenden Patentansprüche, **dadurch gekennzeichnet,**
**daß** bei Live-Streaming die Signaldaten wie Audio-, Video-Bildinhalte in Echtzeit codiert werden,
**daß** die Decodierung über einen speziellen Server erfolgt, der die codierten Multimedia-Inhalte dann an angeschlossene Clients, das heißt Java-Applets, übermittelt, wobei die Daten über UDP, TCP (Socket)- oder HTTP-Verbindungen übertragen werden.

11. Verfahren nach Patentanspruch 10, **dadurch gekennzeichnet,**
**daß** bei UDP- oder TCP-Verbindungen die Daten über die jeweiligen Verbindungsschnittstellen ausgegeben werden und
**daß** zur Vermeidung einer längeren Blockierung der Verbindungsaufbau über einen eigenen Thread erfolgt, der abbrechbar ist.

## Claims

1. Method for platform-independent streaming multimedia content for IP-based networks using Java technology, in particular for Internet or intranet purposes, which allows multimedia content to be transmitted almost continuously, thus making it possible to already present content during ongoing transmission without such content having been completely downloaded, wherein said multimedia content (24-28) is compressed using encoding processes (29-33), and compressed multimedia content (35) is decoded using a Java applet (18) which is started automatically by a web browser, and wherein multimedia elements such as audio signals, moving images, individual images/graphics, text, URLs/links (24-28,19-21) can be flexibly combined and a configuration is performed via Java applet tag parameters, and wherein said multimedia content is combined into individual data blocks of constant duration which are then transmitted individually and subsequently decoded in a client, **characterized in that** the encoding processes are automatically adapted and selected through an estimate of the bit rate available in each case, whereby - for estimating the available bit rate - after each time interval (K), several (N) additional data blocks are simultaneously transmitted in addition to the data blocks which are regularly transmitted, and - based on the estimate determined - the encoding process is then selected whose net bit rate can still be transmitted on the estimated network bandwidth, and a change-over between encoding processes will only take place once the estimated bit rate clearly exceeds the net bit rate required for the respective encoding processes.

2. Method as claimed in claim 1 **characterized in that** said data is compressed using a narrow band encoding process, in particular CELP and/or waveform encoders, and **in that** said Java applet is also transmitted as the actual player each time.

3. Method as claimed in one of the preceding claims **characterized in that** Internet terminal devices supporting the Java standard are used for retrieving the information, and that the streaming method is capable of transmitting both audio and video content as well as individual image content or texts.

4. Method as claimed in one of the preceding claims **characterized in that** navigation between the individual content is made possible by subdividing the content into sections, and that the selection is performed via standard graphic elements such as lists or selection boxes.

5. Method as claimed in one of the preceding claims **characterized in that** the multimedia data is transmitted in the form of an http response.

6. Method as claimed in claim 5 **characterized in that** in the presence of protected applications, networks or parts of networks, for example in the case of a firewall or proxy, platform-independent streaming of multimedia content in IP-based networks occurs through the support of http streaming.

7. Method as claimed in one or plural of the preceding claims **characterized in that**, in order to achieve a more uniform distribution of available computing time to individual threads, image elements to be decoded are subdivided into smaller subframes (37 to 40).

8. Method as claimed in one or plural of the preceding claims **characterized in that** content to be provided is compressed offline using a separate encoder tool and that, in doing so, the encoded data is transmitted using the http protocol, for which purpose the encoded data is merged into a common multimedia file so that the data is transmitted via a single stream, and the required control information regarding the display time and the size of the individual multimedia elements is previously read in from a control file.

9. Method for platform-independent streaming of multimedia content for IP-based networks using Java technology, in particular for on-demand streaming, in which said multimedia content is subdivided into individual content sections (23), the audio and video content is compressed into individual frames of consistent duration, and the encoded multimedia content is merged into a single common multimedia file (35), said method comprising the following steps
a) that (1), a Java applet is loaded as the player and started, and that parameters are read from said Java applet which describe the desired player configuration,
b) that (2), a graphic user interface (GUI) is built as a function of said player parameters,
c) that (3), a control file (36) which is valid for a respective content section and a selected bit rate is read in, said file containing information on the timing, the duration and the size of the individual multimedia elements,
d) that (4), a query is made whether the stream is to be continued or whether the user wishes to skip to a specific position in the stream, which information is transmitted via a graphic user interface,
e) that (5), during stream playback at a random position, the information contained in the control file is used to calculate the offset in bytes at which the desired data is located within the multimedia file,
f) that (6), said encoded multimedia data, as content which has been compressed frame by frame, is subsequently requested in an http request only from the position specified by the offset, and that the multimedia elements to be displayed for this time are determined from the control file,
g) that (7), it is determined that a new frame is to be displayed for this time,
h) that (8), the required frame data is read in from the network and decoded,
i) that, in doing so, the frame data is notably subdivided into smaller subframes which are collected and displayed together via the graphic user interface (GUI)
j) that (9), it is determined whether new text information is to be displayed at this time, and that any such new text information is read in from the network and decoded (10), as well as displayed via the interface (GUI) in the form of a character string whose size is indicated in the control file,
k) that (11), it is determined whether it is possible at this time to branch to other URLs,
l) that (12), a character string required for the address is read in through the network and put together to give the URL to be branched to, with a present browser changing directly to this URL if the user wishes to branch to this address,
m) that (13), the encoded audio and/or video data for the time length of one frame is read in through the network and then decoded,
n) that (14), the decoded audio and/or video data is then directly passed on to a specific program thread for output or buffered, and that processing the next frame can thus start, i.e. while the previous frame is still being output,
o) that (15), it is determined whether it is necessary to change over to a different content section or to a different bit rate, this being controlled by the user via the graphic user interface (GUI),
p) that (16), it is verified whether further multimedia data is present which can be processed and output,
q) that (17), the multimedia stream is then completely output and the applet is stopped/terminated.

10. Method as claimed in one of the preceding claims **characterized in that** in the case of live streaming, the signal data such as audio, video image content is encoded in real time, that such decoding is performed via a dedicated server which then transmits the encoded multimedia content to connected clients, i.e. Java applets, said data being transmitted via UDP, TCP (socket) or http connections.

11. Method as claimed in claim 11 **characterized in that** in the case of UDP or TCP connections, the data is output via the respective connection interfaces, and that, in order to avoid prolonged blocking, the connection is established through a dedicated thread which can be terminated.

## Revendications

1. Procédé de streaming de n'importe quelle plateforme de contenus multimédias pour des réseaux basés sur IP au moyen de la technologie Java, plus particulièrement pour Internet ou un intranet, dans lequel les contenus multimédias peuvent être transmis de manière quasi-continue, de façon à permettre aux contenus d'être présentés pendant la transmission sans qu'ils ne soient entièrement téléchargés, les contenus multimédias (24-28) étant compressés à l'aide de procédés de codage (29-33) et un décodage de contenus multimédias compressés (35) étant effectué à l'aide d'une applet Java (18), qui est démarrée automatiquement par un navigateur Internet et des éléments multimédias comme des signaux audio, des images animées, des images 1 graphiques individuels, du texte, des URL / liens (24-28, 19-21) pouvant être combinés de manière flexible et une configuration ayant lieu par l'intermédiaire de paramètres de balises d'applets Java et les contenus multimédias étant regroupés en différents blocs de données d'une durée constante qui sont ensuite transmis individuellement et décodés successivement au niveau d'un client, **caractérisé en ce qu'**une adaptation automatique et une sélection des procédés de codage est effectuée au moyen d'une évaluation du débit binaire existant, plusieurs (N) blocs de données supplémentaires étant transmis, après un intervalle de temps (K), simultanément en plus des blocs de données transmis régulièrement, pour l'évaluation du débit binaire existant, et le procédé de codage étant sélectionné à l'aide de la valeur d'évaluation déterminée, dont le débit binaire net peut encore être transmis avec la largeur de bande évaluée au niveau du réseau, une commutation entre les procédés de codage n'ayant lieu que lorsque le débit binaire estimé est nettement supérieur au débit binaire net nécessaire pour le procédé de codage correspondant.

2. Procédé selon la revendication 1, **caractérisé en ce que** la compression des données a lieu avec un procédé de codage à bande étroite, plus particulièrement un codeur CELP ou de forme d'onde et **en ce que** l'applet Java étant le véritable lecteur est transmise à chaque fois.

3. Procédé selon l'une quelconque des revendications précédentes, **caractérisé en ce que** des terminaux Internet, qui supportent le standard Java, sont utilisés pour l'appel des informations et **en ce que**, avec le procédé de streaming, sont transmis aussi bien des contenus audio, vidéos que des images individuelles et du texte.

4. Procédé selon l'une quelconque des revendications précédentes, **caractérisé en ce qu'**une navigation est possible entre les différents contenus grâce à une division en sections et **en ce que** la sélection a lieu par l'intermédiaire d'éléments graphiques standard, par exemple des listes ou des boîtes de sélection.

5. Procédé selon l'une quelconque des revendications précédentes, **caractérisé en ce que** les données multimédias sont transmises sous la forme d'une réponse HTTP.

6. Procédé selon la revendication 5, **caractérisé en ce que**, en présence d'applications, de réseaux ou de parties de réseaux protégés, par exemple, dans le cas d'un pare-feu ou proxy, le streaming de n'importe quelle plateforme de contenus multimédias a lieu sur des réseaux basés sur IP au moyen d'un streaming HTTP.

7. Procédé selon l'une quelconque ou plusieurs des revendications précédentes, **caractérisé en ce que**, pour la répartition uniforme du temps de calcul existant sur des threads individuels, une division des éléments d'images à décoder en petites images partielles (37 à 40) est effectuée.

8. Procédé selon l'une quelconque ou plusieurs des revendications précédentes, **caractérisé en ce que** les contenus à mettre à disposition sont compressés hors ligne avec un outil de codage séparé et **en ce que** les données codées sont transmises à l'aide du protocole HTTP, les données codées étant regroupées en un fichier multimédia commun de façon à permettre la transmission des données par l'intermédiaire d'un seul flux et à ce que les informations de contrôles nécessaires soient préalablement lues au moment du visionnage ainsi que la taille des différents éléments multimédias dans un fichier de contrôle.

9. Procédé pour le streaming de n'importe quelle plateforme de contenus multimédias pour des réseaux basés sur IP au moyen d'une technologie Java, plus particulièrement lors d'un streaming sur demande, les contenus multimédias étant divisés en différentes sections de contenus (23), les contenus audio et vidéo étant compressés en différents cadres de durée constante et les contenus multimédias étant groupés dans un fichier multimédia (35) commun, comprenant les étapes de procédé suivantes **caractérisé :**
a) **en ce que** (1) une applet Java est chargée en tant que lecteur et démarrée et en ce qu'à partir de la balise d'applet Java, des paramètres tag sont lus lesquels décrivent la configuration souhaitée du lecteur,
b) **en ce que** (2) une interface utilisateur graphique, GUI, est établi en fonction des paramètres du lecteur,
c) **en ce que** (3) un fichier de contrôle (36) valable pour la section de contenu et un débit binaire sélectionné est lu, lequel fichier de contrôle contient des informations concernant le moment, la durée et la taille des différents éléments multimédias,
d) **en ce que** (4) une requête a lieu afin de savoir si, dans le flux, il convient de continuer ou si l'utilisateur veut passer à un endroit déterminé du flux, cette information étant transmise par l'intermédiaire d'une interface utilisateur graphique,
e) **en ce que** (5) lors de la lecture du flux, à un endroit quelconque, à l'aide des informations contenues dans le fichier de contrôle, le décalage en octets où les données souhaitées se trouvent à l'intérieur du fichier multimédia est calculé,
f) **en ce que** (6) les données multimédias codées sont compressées image par image et ne sont ensuite demandées par l'intermédiaire d'une requête HTTP qu'à partir de l'endroit spécifié par le décalage et en ce que, à partir du fichier de contrôle, les éléments multimédias à afficher pour ce moment sont déterminés,
g) **en ce que** (7) il est détecté que, pour ce moment, une nouvelle image doit être affichée,
h) **en ce que** (8) les données d'images nécessaires sont lues et décodées par l'intermédiaire du réseau,
i) **en ce que** les données d'images sont divisées plus particulièrement en plus petites images partielles qui sont affichées de manière regroupées et présentées en commun par l'intermédiaire de l'interface utilisateur, GUI,
j) **en ce que** (9), il est détecté si, à ce moment, de nouvelles informations textes doivent être affichées et en ce que les nouvelles informations textes sont lues et décodées (10) sous la forme d'une chaîne de caractères dont la taille est indiquée dans le fichier de contrôle par l'intermédiaire du réseau et affichées par l'intermédiaire de l'interface, GUI,
k) **en ce que** (11) il est détecté si, à ce moment, il est possible de ramifier vers d'autres URL,
l) **en ce que** (12) une chaîne de caractères nécessaire pour l'adresse est lue par l'intermédiaire du réseau et est regroupée en une URL bifurquée à suivre, un navigateur existant allant directement vers cette URL lorsque l'utilisateur veut bifurquer vers cette URL,
m) **en ce que** (13) les données audio ou vidéo sont lues pour la durée d'une trame par l'intermédiaire du réseau puis décodées,
n) **en ce que** (14) les données audio ou vidéo décodées sont ensuite transmises directement à un thread de programme spécial pour l'affichage ou mises en mémoire tampon et en ce que le traitement de l'image suivante peut ainsi commencer tandis que l'ancienne trame est encore affichée pendant ce temps,
o) **en ce que** (15) il est détecté par l'utilisateur qu'il faut passer à une autre section de contenu ou à un autre débit binaire, le contrôle ayant lieu par l'intermédiaire de l'interface utilisateur, GUI,
p) **en ce que** (16) il est vérifié si d'autres données multimédias supplémentaires existent qui peuvent être traitées et affichées,
q) **en ce que** (17) le flux multimédia est ensuite entièrement affiché et l'applet est arrêtée/terminée.

10. Procédé selon l'une quelconque des revendications précédentes, **caractérisé en ce que**, lors d'un streaming en direct, les données des signaux comme les contenus audio et vidéo sont codées en temps réel, **en ce que** le décodage a lieu par l'intermédiaire d'un serveur spécial qui transmet ensuite les contenus multimédias codés à des clients connectés, c'est-à-dire des applets Java, les données étant transmises par des liaisons UDP, TCP (socket) ou HTTP.

11. Procédé selon la revendication 10, **caractérisé en ce que**, dans le cas de liaisons UDP ou TCP, les données sont affichées par l'intermédiaire des interfaces de liaison correspondantes et **en ce que**, afin d'éviter un long blocage, l'établissement des liaisons a lieu par l'intermédiaire d'un thread spécifique qui peut être interrompu.
